# EUROPEAN PATENT APPLICATION

(11) **EP 4 482 112 A1**
(43) Date of publication of application: **25.12.2024**
(21) Application number: 22928238.9
(22) Date of filing: 17.10.2022
(51) Int. Cl.: H04L 45/50

(54) **NETWORK SCHEDULING METHOD, NETWORK DEVICE, AND READABLE STORAGE MEDIUM**

(30) Priority: 28.02.2022 CN 202210186358
(71) Applicant: ZTE Corporation, Shenzhen, Guangdong 518057 (CN)
(72) Inventor: LI, Qiang, Shenzhen, Guangdong 518057 (CN); ZHU, Haidong, Shenzhen, Guangdong 518057 (CN); SHU, Ye, Shenzhen, Guangdong 518057 (CN)
(74) Representative: Carangelo, Pierluigi
(86) International application number: PCT/CN2022/125773
(87) International publication number: WO 2023/159975

(57) **Abstract**

The present application provides a network scheduling method, a network device, and a readable storage medium. The method applied to a core device comprises: receiving a route forwarding table from a centralized control device; advertising a VPN route to a first PE device according to the route forwarding table, so that the first PE device encapsulates a first VPN label to a data message according to the VPN route, and sends the data message carrying the first VPN label to the core device; and according to the route forwarding table, replacing the first VPN label carried in the data message with a second VPN label, and sending the data message carrying the second VPN label to a second PE device.

## Description

### CROSS-REFERENCE TO RELATED APPLICATION

This application is filed on the basis of Chinese patent application No. 202210186358.2 filed February 28, 2022, and claims priority to the Chinese patent application, the entire contents of which are incorporated herein by reference.

### TECHNICAL FIELD

Embodiments of the present disclosure relate to the technical field of communication, and more particularly, to a network scheduling method, a network device, and a readable storage medium.

### BACKGROUND

In a hierarchical Virtual Private Network (VPN) scenario, when a core node needs to perform VPN label switching, it is necessary to change an address of a next hop of a VPN route to an address of the core node. However, a prerequisite for implementing the above operation is that the route passes through the core node, which requires the core node to serve as a Route Reflector (RR) to reflect the route. This imposes several constraints on network deployment. In the 5G era, there are numerous scenarios where services and 4G networks are stitched. For example, multi-process stitching of Interior Gateway Protocol (IGP), heterogeneous forwarding/stitching of encapsulations such as Multi-Protocol Label Switching (MPLS) and Segment routing IPv6 (SRv6) may be used. It cannot be ensured that every stitching point is used as an RR. When the stitching point is not an RR, it cannot change the next hop of the route and perform VPN label switching, thereby making it impossible to achieve end-to-end service packet forwarding.

### SUMMARY

The following is a summary of the subject matter set forth in this description. This summary is not intended to limit the scope of protection of the claims.

Embodiments of the present disclosure provide a network scheduling method, a network device, and a readable storage medium.

In accordance with a first aspect of the present disclosure, an embodiment provides a network scheduling method, applied to a core device, the method including: receiving a route forwarding table from a centralized control device, where the route forwarding table is used for representing a correspondence between a first VPN label of the core device and a second VPN label of a second Provider Edge (PE) device, and the route forwarding table carries next hop address information corresponding to the second PE device; advertising a VPN route carrying the first VPN label and next hop address information corresponding to the core device according to the route forwarding table, such that the first PE device encapsulates the first VPN label into a data packet according to the VPN route, and sends the data packet carrying the first VPN label to the core device; and replacing the first VPN label carried in the data packet with the second VPN label according to the route forwarding table, and sending the data packet carrying the second VPN label to the second PE device.

In accordance with a second aspect of the present disclosure, an embodiment provides a network scheduling method, applied to a centralized control device, the method including:
sending a route forwarding table to a core device, such that the core device advertises a VPN route carrying a first VPN label and next hop address information corresponding to the core device to a first PE device according to the route forwarding table, replaces the first VPN label carried in a data packet sent by the first PE device with a second VPN label according to the route forwarding table, and sends the data packet carrying the second VPN label to a second PE device, where the route forwarding table is used for representing a correspondence between the first VPN label of the core device and the second VPN label of the second PE device, the route forwarding table carries next hop address information corresponding to the second PE device, and the first VPN label carried in the data packet is encapsulated by the first PE device according to the VPN route.

In accordance with a third aspect of the present disclosure, an embodiment provides a network scheduling method, applied to a first PE device, the method including: receiving a VPN route advertised by a core device according to a route forwarding table, where the VPN route carries a first VPN label and next hop address information corresponding to the core device, the route forwarding table is used for representing a correspondence between the first VPN label of the core device and a second VPN label of a second PE device, and the route forwarding table carries next hop address information corresponding to the second PE device; and encapsulating the first VPN label into a data packet according to the VPN route, and sending the data packet carrying the first VPN label to the core device, such that the core device replaces the first VPN label carried in the data packet with the second VPN label according to the route forwarding table, and sends the data packet carrying the second VPN label to the second PE device.

In accordance with a fourth aspect of the present disclosure, an embodiment provides a network scheduling method, applied to a network system including a centralized control device, a core device, a first PE device, and a second PE device, the method including: receiving, by the core device, a route forwarding table sent by the centralized control device, where the route forwarding table is used for representing a correspondence between a first VPN label of the core device and a second VPN label of the second PE device, and the route forwarding table carries next hop address information corresponding to the second PE device; advertising, by the core device, a VPN route carrying the first VPN label and next hop address information corresponding to the core device according to the route forwarding table, such that the first PE device carries out the network scheduling method of claim 6 or 7; and replacing, by the core device, the first VPN label carried in the data packet with the second VPN label according to the route forwarding table, and sending the data packet carrying the second VPN label to the second PE device.

In accordance with a fifth aspect of the present disclosure, an embodiment provides a network device, including: a first processing module, configured for receiving a route forwarding table from a centralized control device, where the route forwarding table is used for representing a correspondence between a first VPN label of the network device and a second VPN label of a second PE device, and the route forwarding table carries next hop address information corresponding to the second PE device; a second processing module, configured for advertising a VPN route carrying the first VPN label and next hop address information corresponding to the network device according to the route forwarding table, such that a first PE device encapsulates the first VPN label into a data packet according to the VPN route, and sends the data packet carrying the first VPN label to the network device; and a third processing module, configured for replacing the first VPN label carried in the data packet with the second VPN label according to the route forwarding table, and sending the data packet carrying the second VPN label to the second PE device.

In accordance with a sixth aspect of the present disclosure, an embodiment provides a network device, including: a fourth processing module, configured for sending a route forwarding table to a core device, such that the core device advertises a VPN route carrying a first VPN label and next hop address information corresponding to the core device to a first PE device according to the route forwarding table, replaces the first VPN label carried in a data packet sent by the first PE device with a second VPN label according to the route forwarding table, and sends the data packet carrying the second VPN label to a second PE device, where the route forwarding table is used for representing a correspondence between the first VPN label of the core device and the second VPN label of the second PE device, the route forwarding table carries next hop address information corresponding to the second PE device, and the first VPN label carried in the data packet is encapsulated by the first PE device according to the VPN route.

In accordance with a seventh aspect of the present disclosure, an embodiment provides a network device, including: a fifth processing module, configured for receiving a VPN route advertised by a core device according to a route forwarding table, where the VPN route carries a first VPN label and next hop address information corresponding to the core device, the route forwarding table is used for representing a correspondence between the first VPN label of the core device and a second VPN label of a second PE device, and the route forwarding table carries next hop address information corresponding to the second PE device; and a sixth processing module, configured for encapsulating the first VPN label into a data packet according to the VPN route, and sending the data packet carrying the first VPN label to the core device, such that the core device replaces the first VPN label carried in the data packet with the second VPN label according to the route forwarding table, and sends the data packet carrying the second VPN label to the second PE device.

In accordance with an eighth aspect of the present disclosure, an embodiment provides a network device, including: a memory, a processor, and a computer program stored in the memory and executable by the processor, where the computer program, when executed by the processor, causes the processor to carry out the network scheduling method in accordance with any one of the first aspect, the second aspect, the third aspect, and the fourth aspect.

In accordance with a ninth aspect of the present disclosure, an embodiment provides a computer-readable storage medium, storing computer-executable instructions which, when executed by a computer, cause the computer to carry out the network scheduling method in accordance with any one of the first aspect, the second aspect, the third aspect, and the fourth aspect.

Additional features and advantages of the present disclosure will be set forth in the description which follows, and in part will be apparent from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.
FIG. 1 is a schematic diagram of a hierarchical VPN in the related technology;
FIG. 2 is a schematic diagram of a VPN according to an embodiment of the present disclosure;
FIG. 3 is a flowchart of a network scheduling method according to an embodiment of the present disclosure;
FIG. 4 is a flowchart of operations before advertising a VPN route to a first PE device according to a route forwarding table in a network scheduling method according to an embodiment of the present disclosure;
FIG. 5 is a flowchart of operations before sending a data packet carrying a second VPN label to a second PE device in a network scheduling method according to an embodiment of the present disclosure;
FIG. 6 is a schematic diagram illustrating the principle of a network scheduling method according to an embodiment of the present disclosure;
FIG. 7 is a flowchart of a network scheduling method according to another embodiment of the present disclosure;
FIG. 8 is a flowchart of generating a route forwarding table in a network scheduling method according to an embodiment of the present disclosure;
FIG. 9 is a schematic diagram illustrating the principle of a network scheduling method according to another embodiment of the present disclosure;
FIG. 10 is a flowchart of a network scheduling method according to another embodiment of the present disclosure;
FIG. 11 is a flowchart of operations before sending a data packet carrying a first VPN label to a core device in a network scheduling method according to an embodiment of the present disclosure;
FIG. 12 is a flowchart of a network scheduling method according to another embodiment of the present disclosure;
FIG. 13 is a flowchart of operations before a core device advertises a VPN route to a first PE device according to a route forwarding table in a network scheduling method according to an embodiment of the present disclosure;
FIG. 14 is a flowchart of operations before a core device sends a data packet carrying a second VPN label to a second PE device in a network scheduling method according to an embodiment of the present disclosure; and
FIG. 15 is a schematic diagram of a network device according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

First, the explanations of related terms involved in the embodiments of the present disclosure are given below.

VPN: virtual private network, which is a private network established on a public network.

MPLS: Multi-Protocol Label Switching, which is a label-based forwarding technology, and is currently widely used to transmit data such as VPN packets.

SRv6: Segment routing IPv6, which is a new generation IP bearer protocol that adopts the existing IPv6 forwarding technology and realizes network programmability through flexible IPv6 extension headers.

VRF instance: Virtual Routing Forwarding instance, or referred to as VPN Instance. VPN and VRF substantially have the same meaning in the present disclosure.

Customer Edge (CE): an edge device of a user network (i.e., a site). The site is connected to a service provider network through the CE. When the CE device establishes an adjacency relationship with a PE device directly connected thereto, the CE device advertises VPN route information of this site to the PE device, and learns VPN route information of a remote site from the PE device.

Provider Edge (PE): an edge device of the service provider network, which is directly connected to a CE of a site. After the PE device learns the CE local VPN route information from the CE device directly connected thereto, the PE device exchanges VPN route information with other PEs through the Border Gateway Protocol (BGP).

Core device (Provider, P): a backbone device in a service provider network, which is not directly connected to a CE. In an MPLS network, the P device only needs to have a basic MPLS packet forwarding capability. In an SRv6 network, the P device only needs to have a SRv6 packet forwarding capability.

RR: Route Reflector, which is used for reflecting a route.

Incoming label inlabel and outgoing label outlabel: MPLS may use the Label Distribution Protocol (LDP) to distribute labels. The labels include outgoing labels and incoming labels. The outgoing label is assigned to a router running MPLS by a downstream router (where downstream means the downstream of data packet forwarding, which is opposite to the routing direction), and the incoming label is assigned by router running MPLS to another router.

Route Distinguisher (RD): an address modifier for distinguishing VPN routes of separate customers who connect to the provider.

Route Target (RT): which is used for distributing route information.

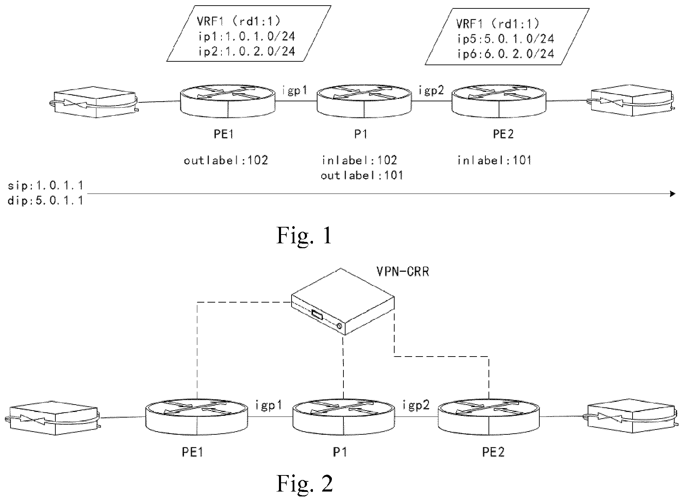

FIG. 1 is a schematic diagram of a hierarchical VPN in the related technology, corresponding to a scenario of stitching two VPNs. In this scenario, PE1 and PE2 are on-premise VPN devices, and VRF must be deployed. As an intermediate node, P1 is not on-premise, i.e., is not directly connected to a site, and does not need to restore an original data packet of a user and perform IP layer routing based on the original data packet of the user, so there is no need to deploy VRF.

In a hierarchical VPN scenario, due to the isolation of public network forwarding, it is necessary to perform hierarchical VPN forwarding on P1, and change a next hop on P1 for VPN label switching. Multi-Protocol BGP (MP-BGP) is deployed between each PE and P1. PE2 assigns a label to a VPN route as inlabel PE2.inlabel of PE2, and advertises PE2.inlabel in the VPN route to P1. P1 changes the next hop to itself, then uses PE2.inlabel as a local outlabel, assigns a VPN switching label as P1.inlabel, and sends the VPN route carrying P1.inlabel to PE1. PE1 receives the VPN route and uses P1.inlabel as its own PE1.outlabel. In this process, it needs to be ensured that P1 is an RR. Because the number of VPNs is large and unknown, a network administrator needs to assign VPNs at the VPN stitching point, which involves a heavy workload and is error-prone and inefficient. Consequently, packet forwarding of an end-to-end service cannot be realized stably.

In view of the above, the present disclosure provides a network scheduling method, a network device, and a readable storage medium. In a case where a core device receives a route forwarding table from a centralized control device, because the route forwarding table can represent a correspondence between a first VPN label of the core device and a second VPN label of a second PE device and also carries next hop address information corresponding to the second PE device, the core device may advertise a related VPN route to the first PE device according to the route forwarding table, such that the first PE device encapsulates the first VPN label into a data packet and sends the data packet to the core device. As such, the core device can replace the first VPN label in the data packet with the second VPN label according to the routing forwarding table and send the data packet carrying the second VPN label to the second PE device, thus implementing hierarchical VPN forwarding. In this way, packet forwarding of an end-to-end service is realized. Compared with the related technology, the core device does not need to maintain the advertising and withdrawal of routes, and a network administrator does not need to perform VPN stitching manually in a hierarchical VPN scenario. Instead, the centralized control device delivers the route forwarding table, such that after acquiring the route forwarding table, the core device can automatically implement the management and stitching of VPN services. In this way, the efficiency of resource management and allocation in the hierarchical VPN scenario can be improved, and packet forwarding of an end-to-end service can be realized stably, thereby meeting the requirements for large-scale network deployment and rapid service provisioning.

The embodiments of the present disclosure will be further described in detail below in conjunction with the accompanying drawings.

FIG. 2 is a schematic diagram of a VPN according to an embodiment of the present disclosure.

In an example of FIG. 2, the VPN includes, but not limited to, a first PE device (i.e., PE1 in FIG. 2), a core device (i.e., P1 in FIG. 2), a second PE device (i.e., PE2 in FIG. 2), and a centralized control device (i.e., VPN-Controller and Route Reflector, VPN-CRR in FIG. 2). The first PE device, the core device, the second PE device, and the centralized control device may also be configured to execute the network scheduling method according to the embodiments of the present disclosure. The centralized control device respectively establishes a BGP-Link State (BGP-LS) neighbor relationship with the first PE device, the core device, and the second PE device. The core device configures first report information, the second PE device configures second report information, and the first PE device configures third report information. The first report information includes routing address information and a VPN label value range of the core device. The second report information includes routing address information and a VPN label value range of the second PE device. The third report information includes routing address information and a VPN label value range of the first PE device. The routing address information of each device corresponds to the VPN label value range of the device. The label value range includes all label values between a configured minimum available label and a configured maximum available label.

In an embodiment, the first PE device, the core device, and the second PE device are each assigned with an available routing address, and the routing address of each device corresponds to label information of the device. Because the centralized control device respectively establishes a BGP-LS neighbor relationship with the first PE device, the core device, and the second PE device, the centralized control device can acquire the label information and the available routing address of each device, and establish a mapping relationship between the label information and the routing address. Therefore, when receiving a VPN route of a VRF instance advertised by each device, the centralized control device can distinguish, according to a VPN label carried in the VPN route, the device that sends the VPN route, and further determine that different VRF instances need to be stitched and the stitching point is in the core device. Then, the centralized control device sends a corresponding route forwarding table to the core device, such that the core device executes related operations according to the route forwarding table to realize VPN stitching.

In an embodiment, the VPN further includes, but not limited to, a first CE device (i.e., CE1 in FIG. 2) and a second CE device (i.e., CE2 in FIG. 2). CE1 is directly connected to PE1. CE2 is directly connected to PE2. CE1 may directly forward a destination IP address of a service packet to PE1, such that CE2 sends the service packet according to the destination IP address of the service packet, thus realizing a service packet forwarding process.

It should be noted that the VPN in the example of FIG. 2 is merely schematically provided as a basic scenario, and there may be more VRF and VPN routes in actual applications, i.e., there may be more PE devices and corresponding core devices. Regardless of the number of PE devices and the number of core devices, the centralized control device establishes a BGP-LS neighbor relationship with each device in a similar manner, i.e., the centralized control device may have a wider range of application scenarios, which is not limited in this embodiment.

The first PE device, the core device, the second PE device, and the centralized control device in the VPN may each include a memory and a processor. The memory and the processor may be connected by a bus or in other ways.

The memory, as a non-transitory computer-readable storage medium, may be configured for storing a non-transitory software program and a non-transitory computer-executable program. In addition, the memory may include a high-speed random access memory, and may also include a non-transitory memory, e.g., at least one magnetic disk storage device, flash memory device, or other non-transitory solid-state storage device. In some implementations, the memory may include memories located remotely from the processor, and the remote memories may be connected to the processor via a network. Examples of the network include, but not limited to, the Internet, an intranet, a local area network, a mobile communication network, and combinations thereof.

The VPN and application scenarios described in the embodiments of the present disclosure are for the purpose of illustrating the technical schemes of the embodiments of the present disclosure more clearly, and do not constitute a limitation to the technical schemes provided in the embodiments of the present disclosure. Those having ordinary skills in the art may know that with the evolution of VPNs and the emergence of new application scenarios, the technical schemes provided in the embodiments of the present disclosure are also applicable to similar technical problems.

Those having ordinary skills in the art may understand that the VPN shown in FIG. 2 does not constitute a limitation to the embodiments of the present disclosure, and more or fewer components than those shown in the figure may be included, or some components may be combined, or a different component arrangement may be used.

In the VPN shown in FIG. 2, the first PE device, the core device, the second PE device, and the centralized control device may respectively call a network scheduling program stored therein to cooperate with each other to execute the network scheduling method.

Embodiments of the network scheduling method of the present disclosure are proposed below based on the structure of the above VPN.

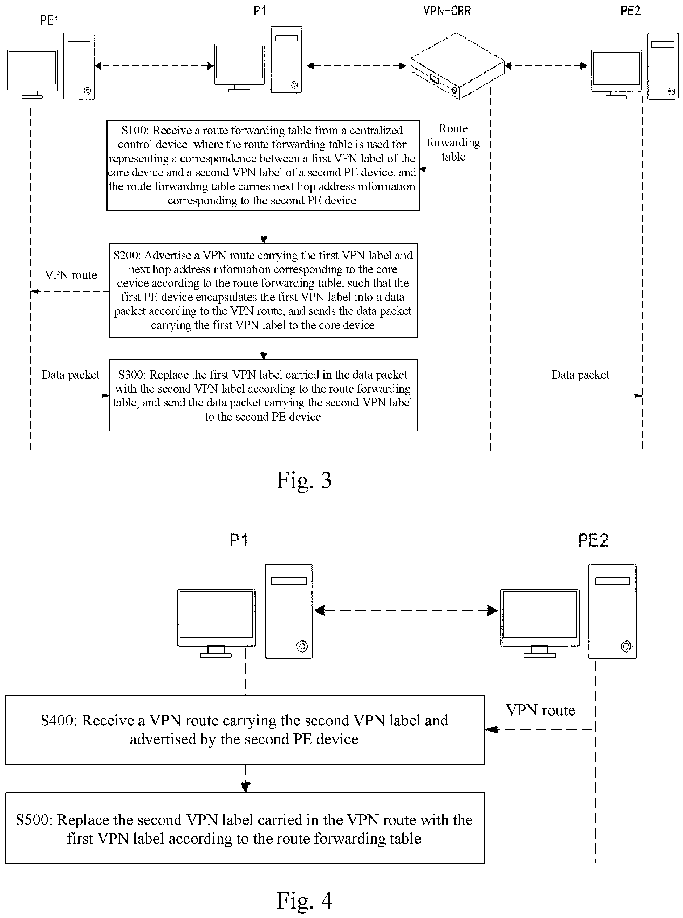

FIG. 3 is a flowchart of a network scheduling method according to an embodiment of the present disclosure. The network scheduling method may be applied to, for example, but not limited to, the core device in the VPN shown in FIG. 2, and includes, for example, but not limited to, the following steps S100 to S300.

At S 100, a route forwarding table from a centralized control device is received, where the route forwarding table is used for representing a correspondence between a first VPN label of the core device and a second VPN label of a second PE device, and the route forwarding table carries next hop address information corresponding to the second PE device.

In an embodiment, because the centralized control device determines that different VRF instances need to be stitched and the stitching point is at the core device, the centralized control device may send a corresponding route forwarding table to the core device, such that the core device performs related operations according to the route forwarding table to realize VPN stitching. The correspondence between the first VPN label of the core device and the second VPN label of the second PE device is used as a basis for the core device to perform VPN stitching. The next hop address information corresponding to the second PE device can provide a next hop address of the data packet.

It can be understood that the next hop address information in the above embodiment has the same meaning as routing address information in report information of each device, i.e., the next hop address information may be equivalent to the routing address information in the report information of the device. Therefore, the centralized control device can determine the device corresponding to the next hop address information based on the next hop address information, such that the centralized control device can further learn the status of VRF instance stitching.

It should be noted that the form of the route forwarding table is not limited in this embodiment, and the route forwarding table may be formed according to an application scenario or factors, such as ease of transmission, difficulty of generation, and the like. For example, the route forwarding table may be presented in the form of a label forwarding table, where the first VPN label is used as an incoming label of the label forwarding table, the second VPN label is used as an outgoing label of the label forwarding table, and the routing address information corresponding to the second PE device is used as the next hop address of the label forwarding table. As such, after receiving the label forwarding table, the core device can extract the correspondence between the first VPN label and the second VPN label, the next hop address information, etc., from the label forwarding table. For other methods, the route forwarding table may be similarly generated and sent according to this process, so the details will not be repeated here to avoid redundancy.

At S200, a VPN route carrying the first VPN label and next hop address information corresponding to the core device is advertised according to the route forwarding table, such that the first PE device encapsulates the first VPN label into a data packet according to the VPN route, and sends the data packet carrying the first VPN label to the core device.

In an embodiment, when the core device as the VPN stitching side receives the route forwarding table from the centralized control device, the core device advertises the first VPN label and the next hop address information pointing to itself to the first PE device, such that the first PE device sends the data packet to the core device according to the first VPN label, so as to further realize hierarchical VPN forwarding.

In an embodiment, the second PE device may select a label from the carried second report information to generate a first VPN label for the VRF instance. The centralized control device has acquired the second report information based on the BGP-LS protocol. Therefore, when the second PE device advertises a VPN route of the VRF instance to the centralized control device, the centralized control device can accurately determine that the VPN route corresponds to the second PE device according to the second report information. Compared with the indiscriminate route advertising in the related technology, the report information can enable the centralized control device to identify a target route more quickly and accurately and send the route forwarding table based on the target route, thereby improving the overall implementation efficiency of hierarchical VPN forwarding of the core device.

At S300, the first VPN label carried in the data packet is replaced with the second VPN label according to the route forwarding table, and the data packet carrying the second VPN label is sent to the second PE device.

In an embodiment, in a case where a core device receives a route forwarding table from a centralized control device, because the route forwarding table can represent a correspondence between a first VPN label of the core device and a second VPN label of a second PE device and also carries next hop address information corresponding to the second PE device, the core device may advertise a related VPN route to the first PE device according to the route forwarding table, such that the first PE device encapsulates the first VPN label into a data packet and sends the data packet to the core device. As such, the core device can replace the first VPN label in the data packet with the second VPN label according to the routing forwarding table and send the data packet carrying the second VPN label to the second PE device, thus implementing hierarchical VPN forwarding. In this way, packet forwarding of an end-to-end service is realized. Compared with the related technology, the core device does not need to maintain the advertising and withdrawal of routes, and a network administrator does not need to perform VPN stitching manually in a hierarchical VPN scenario. Instead, the centralized control device delivers the route forwarding table, such that after acquiring the route forwarding table, the core device can automatically implement the management and stitching of VPN services. In this way, the efficiency of resource management and allocation in the hierarchical VPN scenario can be improved, and packet forwarding of an end-to-end service can be realized stably, thereby meeting the requirements for large-scale network deployment and rapid service provisioning.

It should be noted that as shown in FIG. 3, in the scenario described in this embodiment, the VPN route is advertised from the second PE device, so the second PE device forwards the data packet of the service from CE1 without associating with the third report information configured by the first PE device. However, this is only an example, and there may also be other similar scenarios, which will not be detailed herein to avoid redundancy. For example, in a scenario where the VPN route is advertised from the first PE device, the first PE device can forward the data packet of the service from CE1 without associating with the second report information configured by the second PE device. Such scenarios are all applicable to the VPN in this embodiment because the centralized control device has acquired the report information from all the devices. VPN route flooding between the PE devices can be implemented using the centralized control device as an RR, and the core device does not need to send, receive, and store any route, such that the performance of hierarchical VPN forwarding can be improved.

In an example shown in FIG. 4, before S200, the method further includes, but not limited to, the following steps S400 to S500.

At S400, a VPN route carrying the second VPN label and advertised by the second PE device is received.

At S500, the second VPN label carried in the VPN route is replaced with the first VPN label according to the route forwarding table.

In an embodiment, the second PE device selects a label from its own VPN label value range as the VPN label of the VRF instance (i.e., the second VPN label), and advertises the VPN route of the VRF instance to the core device, and the core device changes the VPN label from the second VPN label to the first VPN label according to the route forwarding table, and sends a VPN route of another VRF instance carrying the first VPN label to the first PE device. It can be seen that the core device can further perform route forwarding according to the route forwarding table, to provide a hierarchical VPN forwarding function.

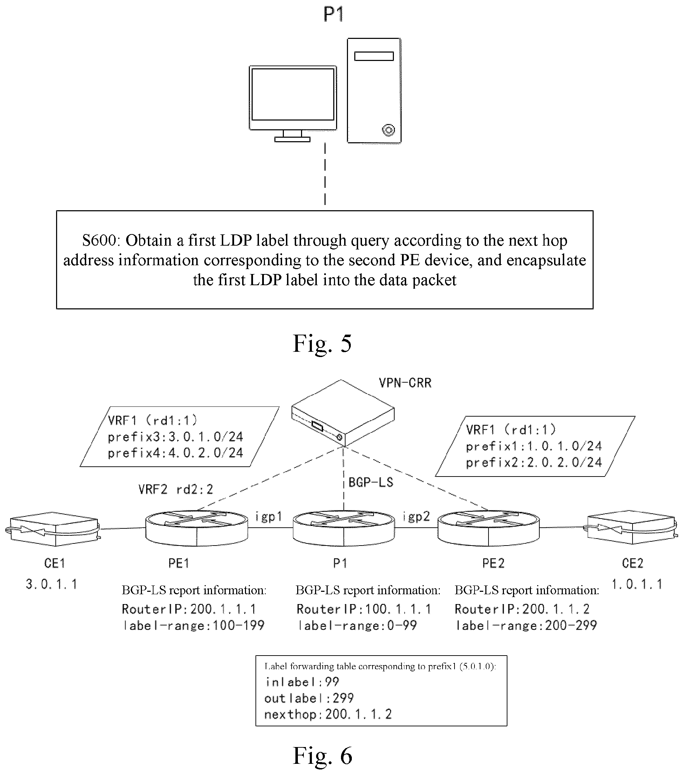

In an example shown in FIG. 5, before "sending the data packet carrying the second VPN label to the second PE device" in S300, the method further includes, but not limited to, a following step S600.

At S600, a first LDP label is obtained through query according to the next hop address information corresponding to the second PE device, and the first LDP label is encapsulated into the data packet.

In an embodiment, the core device may obtain the next hop address information corresponding to the second PE device from the route forwarding table, and determine that the next hop points to the second PE device. Therefore, the core device obtains the first LDP label through query according to the next hop address information corresponding to the second PE device, i.e., obtains an outer LDP label corresponding to the second PE device, encapsulates the first LDP label into a data packet, and accurately sends the data packet carrying the first LDP label to the second PE device.

It should be noted that this embodiment is described using the LDP label as an example only, and because the MPLS capability may also be Resource Reservation Protocol (RSVP), Segmental Routing (SR), or the like, the LDP label may also be replaced with a label for the corresponding MPLS capability, which is not limited in this embodiment.

Examples are given below to illustrate the operating principles of the above embodiments,

### Example One:

FIG. 6 is a schematic diagram illustrating the principle of a network scheduling method according to an embodiment of the present disclosure.

Using FIG. 6 as an example, the first CE device is CE1, the second CE device is CE2, the centralized control device is a VPN-CRR, the first PE device is PE1, the second PE device is PE2, and the core device is P 1.

User side deployment: PE1 accesses CE1, and PE2 accesses CE2. An RD and an RT of VRF1 deployed by each of PE1 and PE2 are both 1:1. An interface of CE1 which is connected to PE1 is configured with an IP address 3.0.1.2/24 and is bound to VRF1. A route prefix generated by PE1 is Prefix3 (3.0.1.0/24). An interface of CE2 which is connected to PE2 is configured with an IP address 1.0.1.2/24 and is bound to VRF1. A route prefix generated by PE2 is Prefix1 (1.0.1.0/24).

Public network deployment: PE1 is connected to P1 through an IGP process 1, and an MPLS capability is enabled in the IGP process 1. PE2 is connected to P1 through an IGP process 2, and an MPLS capability is enabled in the IGP process 2. The MPLS capability may be LDP, RSVP, SR, etc.

BGP deployment: PE1 and PE2 respectively establish an MP-BGP neighbor relationship with the VPN-CRR. PE1 and PE2 serve as clients of the VPN-CRR. A VPN route is reflected by the VPN-CRR. A BGP router IP address (i.e., RouterIP shown in FIG. 6, which will not be repeated below) of PE1 is R-IP1 (200.1.1.1), and a BGP router IP address of PE2 is R-IP2 (200.1.1.2).

BGP-LS and delivery channel deployment: PE1, PE2, and P1 respectively establish a BGP-LS neighbor relationship and a netconf channel with the centralized control device.

Switching node deployment: P1 configures a VPN label reservation range VPN-label-range to VL_range1 (0, 99) and a switchable router IP address to R_IP1 (100.1.1.1).

After the parameter setting is completed, the following steps are executed.

At step 101, PE2 generates a VPN instance label VPN-label2_1 (299) for VRF1, and advertises a prefix route R1 of VRF1 to the VPN-CRR, where the prefix route R1 carries a routing prefix Prefix1 (1.0.1.0/24), an RD (1:1), an RT (1:1), the VPN instance label VPN-label2_1 (299), and a route next hop nexthop which is R-IP2 (200.1.1.2).

At step 102, the VPN-CRR receives the VPN route R1, changes the next hop to R_IP1 (100.1.1.1) according to a policy, generates a prefix label prefix_label1 (99) in the label range VL-range1 to which R_IP1 belongs, and forms a forwarding table F1 corresponding to prefix1: (inlabel:prefix_label1, outlabel:VPN-label2_1, nexthop:R-IP2), i.e., (inlabel:99, outlabel:299, nexthop:200.1.1.2), where F1 is used as a route forwarding table to be sent to P1.

At step 103, the VPN-CRR delivers the route forwarding table F1 to P1 to which R-IP1 belongs through the netconf channel. It should be noted that the VPN_CRR may deliver F1 to P1 through the netconf channel or other channels. In this embodiment, the netconf channel is used as an example.

At step 104, P1 changes routing information of R1 and advertises the changed routing information to PE1. Changing the routing information include changing the VPN label to prefix_label1 (i.e., 99) and changing nexthop to R_IP1.

At step 105, after F1 is sent to P1, P1 delivers the forwarding table, forms a label forwarding table F1_1 (inlabel:99, outlabel:299, nexthop:200.1.1.2), and advertises the route R1 to PE1.

At step 106, PE1 receives the route R1, imports the route R1 into a routing table of VRF1 according to the routing information RT (1:1), forms a VPN forwarding table, extracts the VPN label prefix_label1 of the route R1 as a forwarding outgoing label of the VRF1 prefix prefix1 of PE1, and forms a forwarding table.

At step 107, CE1 forwards a destination IP address Dest_IP1 (1.0.1.1) of an IP packet Packet1 to PE1.

At step 108, an interface of PE1 which receives the packet is bound to the VRF1 instance, searches the routing table under VRF1, forwards the packet Packet1 according to the forwarding table corresponding to prefix1, with a next hop being R IP1 of P1 and a VPN label being prefix_label1, and performs label encapsulation on the packet Packet1, to encapsulate the VPN label prefix_label1 and the outer LDP label.

At step 109, P1 receives Packet1, decapsulates the labels, finds the corresponding forwarding table F1_1 (inlabel:99, outlabel:299, nexthop:200.1.1.2) according to prefix_label1, changes the VPN label from 99 to 299, obtains an LDP label of R_IP2 (200.1.1.2) through query according to nexthop:200.1.1.2 for encapsulation, and then forwards Packet1 to PE2.

At step 110, PE2 receives the packet Packet!, determines VRF1 to which the packet Packet1 belongs according to the VPN label VPN-label2_1, queries the routing table of VRF1, and forwards the packet Packet1 to CE2.

At step 111, after receiving the packet Packet1, CE2 sends the packet Packet1 according to the destination IP address of the packet which is the local address, thus realizing packet forwarding of an end-to-end service.

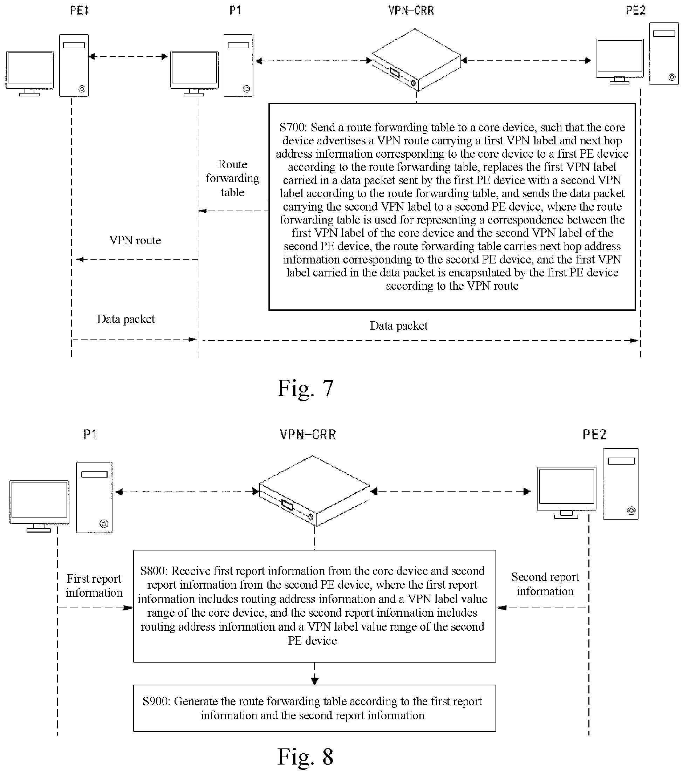

FIG. 7 is a flowchart of a network scheduling method according to another embodiment of the present disclosure. The network scheduling method may be applied to, for example, but not limited to, the centralized control device in the VPN shown in FIG. 2, and includes, for example, but not limited to, a following step S700.

At S700, a route forwarding table is sent to a core device, such that the core device advertises a VPN route carrying a first VPN label and next hop address information corresponding to the core device to a first PE device according to the route forwarding table, replaces the first VPN label carried in a data packet sent by the first PE device with a second VPN label according to the route forwarding table, and sends the data packet carrying the second VPN label to a second PE device.

The route forwarding table is used for representing a correspondence between the first VPN label of the core device and the second VPN label of the second PE device, the route forwarding table carries next hop address information corresponding to the second PE device, and the first VPN label carried in the data packet is encapsulated by the first PE device according to the VPN route.

In an embodiment, in a case where a centralized control device sends a route forwarding table to a core device, because the route forwarding table can represent a correspondence between a first VPN label of the core device and a second VPN label of a second PE device and also carries next hop address information corresponding to the second PE device, the core device may advertise a related VPN route to the first PE device according to the route forwarding table, such that the first PE device encapsulates the first VPN label into a data packet and sends the data packet to the core device. As such, the core device can replace the first VPN label in the data packet with the second VPN label according to the routing forwarding table and send the data packet carrying the second VPN label to the second PE device, thus implementing hierarchical VPN forwarding. In this way, packet forwarding of an end-to-end service is realized. Compared with the related technology, the core device does not need to maintain the advertising and withdrawal of routes, and a network administrator does not need to perform VPN stitching manually in a hierarchical VPN scenario. Instead, the centralized control device delivers the route forwarding table, such that after acquiring the route forwarding table, the core device can automatically implement the management and stitching of VPN services. In this way, the efficiency of resource management and allocation in the hierarchical VPN scenario can be improved, and packet forwarding of an end-to-end service can be realized stably, thereby meeting the requirements for large-scale network deployment and rapid service provisioning.

It should be noted that the steps of the network scheduling method in this embodiment have the same technical principles and the same technical effects as the steps of the network scheduling methods in the embodiments shown in FIG. 3 to FIG. 6. The difference between the embodiments lies in that the embodiments are executed by different entities. The embodiments shown in FIG. 3 to FIG. 6 are executed by the core device, and this embodiment is executed by the centralized control device. For the technical principles and technical effects of this embodiment, reference may be made to the related description in the embodiments shown in FIG. 3 to FIG. 6. To avoid redundancy, the details will not be repeated here.

In an example shown in FIG. 8, before S700, the method further includes, but not limited to, the following steps S800 to S900 for generating the route forwarding table.

At S800, first report information from the core device and second report information from the second PE device are received, where the first report information includes routing address information and a VPN label value range of the core device, and the second report information includes routing address information and a VPN label value range of the second PE device.

At S900, the route forwarding table is generated according to the first report information and the second report information.

In an embodiment, by receiving the first report information from the core device and the second report information from the second PE device, the centralized control device can respectively learn the routing address information and the VPN label value ranges of the core device and the second PE device, construct a correspondence between the VPN label of the core device and the VPN label of the second PE device based on the routing address information and the VPN label value ranges, and accurately and reliably generate a route forwarding table based on the determined next hop address information corresponding to the second PE device, such that the core device can further perform hierarchical forwarding using the route forwarding table.

Examples are given below to illustrate the operating principles of the above embodiments,

### Example Two:

Still using FIG. 6 as an example, different from Example One where each node has only one switchable router IP, in this example, each node has a plurality of switchable router IPs, the BGP-LS report information of P1 may have a plurality of router IPs (including R_IP1 and R IP11) respectively corresponding to VRF1 and VRF2, and the VPN_CRR changes the route next hop of VRF1 to R_IP1 (100.1.1.1) and changes the route next hop of VRF2 to R_IP11 (100.1.1.11) according to a policy.

After the parameter setting is completed, the following steps are executed.

At step 201, PE2 generates a VPN instance label VPN-label2_2 (298) for VRF2, and advertises a prefix route R2 of VRF2 to the VPN-CRR, where the prefix route R1 carries a routing prefix Prefix2 (2.0.1.0), an RD (2:2), an RT (2:2), the VPN instance label VPN-label2_2 (298), and a route next hop nexthop which is R-IP2 (200.1.1.2).

At step 202, the VPN-CRR receives the VPN route R2, changes the next hop to R_IP11 (100.1.1.11) according to a routing policy, generates a prefix label prefix_label2 (98) in the label range VL-range1 to which R_IP11 belongs, and forms a forwarding table F11 corresponding to prefix2: (inlabel:prefix_label2, outlabel:VPN-label2_2, nexthop:R-IP2), i.e., (inlabel:98, outlabel:298, nexthop:200.1.1.2), where F11 is used as a route forwarding table to be sent to P1.

At step 203, the VPN-CRR delivers the route forwarding table F11 to P1 to which R-IP11 belongs through the netconf channel. It should be noted that the VPN CRR may deliver F11 to P1 through the netconf channel or other channels. In this embodiment, the netconf channel is used as an example.

At step 204, P1 changes routing information of R2 and advertises the changed routing information to PE1. Changing the routing information include changing the VPN label to prefix label11 (i.e., 98) and changing nexthop to R IP11.

At step 205, after F11 is sent to P1, P1 delivers the forwarding table, forms a label forwarding table F11_1 (inlabel:98, outlabel:298, nexthop:200.1.1.2), and advertises the route R2 to PE1.

At step 206, PE1 receives the route R2, imports the route R2 into a routing table of VRF2 according to the routing information RT (2:2), forms a VPN forwarding table, extracts the VPN label prefix_label2 of the route R2 as a forwarding outgoing label of the VRF2 prefix prefix2 of PE1, and forms a forwarding table.

At step 207, CE1 forwards a destination IP address Dest_IP1 (2.0.1.1) of an IP packet Packet2 to PE1.

At step 208, an interface of PE1 which receives the packet is bound to the VRF2 instance, searches the routing table under VRF2, forwards the packet Packet2 according to the forwarding table corresponding to prefix2, with a next hop being R IP11 of P1 and a VPN label being prefix_label2, and performs label encapsulation on the packet Packet2, to encapsulate the VPN label prefix_label2 and the LDP label.

At step 209, P1 receives Packet2, decapsulates the labels, finds the corresponding forwarding table F 11_1 (inlabel:98, outlabel:298, nexthop:200.1.1.2) according to prefix_label2, changes the VPN label from 98 to 298, obtains an MPLS label of R_IP2 (200.1.1.2) through query according to nexthop:200.1.1.2 for encapsulation, and then forwards Packet2 to PE2.

At step 210, PE2 receives the packet Packet2, determines VRF2 to which the packet Packet2 belongs according to the VPN label VPN-label2_2, queries the routing table of VRF2, and forwards the packet Packet2 to CE2.

At step 211, after receiving the packet Packet2, CE2 sends the packet Packet2 according to the destination IP address of the packet which is the local address, thus realizing packet forwarding of an end-to-end service.

It can be understood that the network scheduling method in this embodiment may also be applied to, for example, but not limited to, the second PE device in the VPN shown in FIG. 2. It should be noted that the steps of the network scheduling method applied to the second PE device in this embodiment have the same technical principles and the same technical effects as the steps of the network scheduling methods in the embodiments shown in FIG. 3 to FIG. 8. The difference between the embodiments lies in that the embodiments are executed by different entities. The embodiments shown in FIG. 3 to FIG. 6 are executed by the core device, the embodiments shown in FIG. 7 to FIG. 8 are executed by the centralized control device, and this embodiment is executed by the second PE device. For the technical principles and technical effects of this embodiment, reference may be made to the related description in the embodiments shown in FIG. 3 to FIG. 8. To avoid redundancy, the details will not be repeated here.

Examples are given below to illustrate the operating principles of the above embodiments,

### Example Three:

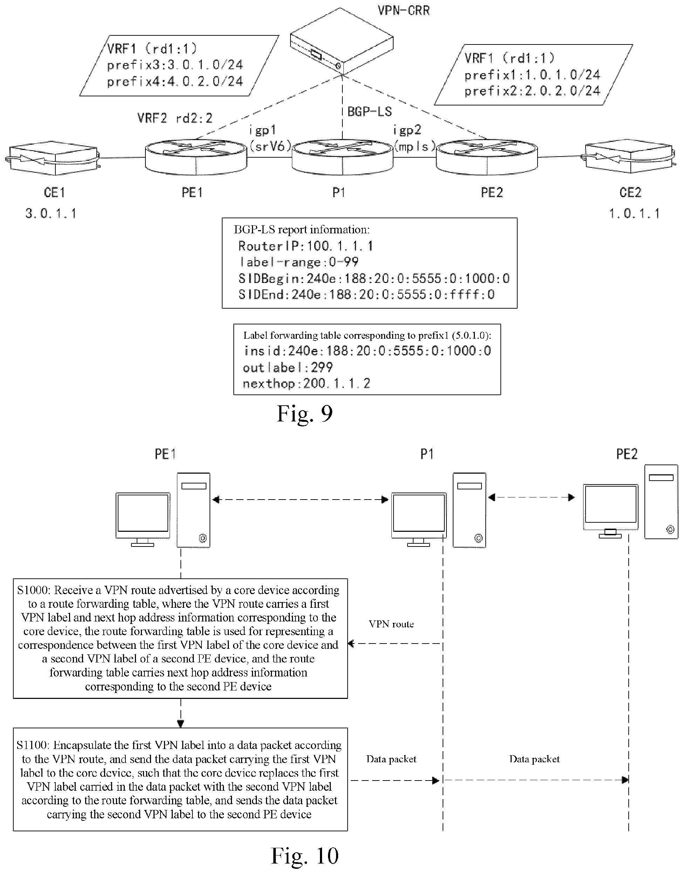

FIG. 9 is a schematic diagram illustrating the principle of a network scheduling method according to another embodiment of the present disclosure.

Using FIG. 9 as an example, different from Example One, P 1 in this example can support stitching and forwarding in different forms of public network encapsulation, i.e., SRv6 is enabled in the IGP process 1, MPLS is enabled in the IGP process 2, and VPN switching is performed on P1. The difference between the parameter deployment in this example and the parameter deployment in Example One lies only in public network deployment, so details will not be described here.

Public network deployment: PE1 is connected to P1 through an IGP process 1, and an SRv6 capability is enabled in the IGP process 1. A VPN encapsulation form configured by VRF1 of PE1 is SRv6. PE1 and MP-BGP neighbors of the VPN-CRR enable the SRv6 capability.

After the parameter setting is completed, the following steps are executed.

At step 301, PE2 generates a VPN instance label VPN-label2_1 (299) for VRF1, and advertises a prefix route R1 of VRF1 to the VPN-CRR, where the prefix route R1 carries a routing prefix Prefix1 (1.0.1.0/24), an RD (1:1), an RT (1:1), the VPN instance label VPN-label2_1 (299), and a route next hop nexthop which is R-IP2 (200.1.1.2).

At step 302, the VPN-CRR receives the VPN route R1, changes the next hop to R_IP1 (100.1.1.1) according to a routing policy, generates a prefix label SID1 (XXXX) in a segment ID (SID) range SID-range1 to which R_IP1 belongs, and forms a forwarding table corresponding to prefix1 as follows:
F1 (inSID:SID 1, outlabel:VPN-label2_1, nexthop:R-IP2)
i.e., (inSID:240e:188:20:0:5555:0:1000:0, outlabel:299, nexthop:200.1.1.2). F1 is used as a route forwarding table to be sent to P1.

At step 303, the VPN-CRR delivers the label forwarding table F1 to P1 to which R-IP1 belongs through the netconf channel. It should be noted that the VPN CRR may deliver F1 to P1 through the netconf channel or other channels. In this embodiment, the netconf channel is used as an example.

At step 304, P1 changes routing information of R1 and advertises the changed routing information to PE1. Changing the routing information include changing the VPN label to prefix_label1 (i.e., 240e:188:20:0:5555:0:1000:0) and changing nexthop to R_IP1.

At step 305, after F1 is sent to P1, P1 delivers the forwarding table, forms a label forwarding table F1_1 (inSID:240e:188:20:0:5555:0:1000:0, outlabel:299, nexthop:200.1.1.2), and advertises the route R1 to PE1.

At step 306, PE1 receives the route R1, imports the route R1 into a routing table of VRF1 according to the routing information RT (1:1), forms a VPN forwarding table, extracts the VPN SID SID1 of the route R1 as a forwarding outgoing SID of the VRF1 prefix prefix1 of PE1, and forms a forwarding table.

At step 307, CE1 forwards a destination IP address Dest_IP1 (1.0.1.1) of an IP packet Packet1 to PE1.

At step 308, an interface of PE1 which receives the packet is bound to the VRF1 instance, searches the routing table under VRF1, forwards the packet according to the forwarding table corresponding to prefix1, searches SID1 according to the SRv6 encapsulation, and then forwards the packet to P1.

At step 309, P1 receives Packet1, decapsulates the SID, finds the corresponding forwarding table F1_1(inSID:240e:188:20:0:5555:0:1000:0, outlabel:299, nexthop:200.1.1.2) according to SID1, changes the VPN label from 99 to 299, obtains an MPLS label of R_IP2 (200.1.1.2) through query according to nexthop:200.1.1.2 for encapsulation, and then forwards Packet1 to PE2.

At step 310, PE2 receives the packet Packet!, determines VRF1 to which the packet Packet1 belongs according to the VPN label VPN-label2_1, queries the routing table of VRF1, and forwards the packet Packet1 to CE2.

At step 311, after receiving the packet Packet1, CE2 sends the packet Packet1 according to the destination IP address of the packet which is the local address, thus realizing packet forwarding of an end-to-end service.

FIG. 10 is a flowchart of a network scheduling method according to another embodiment of the present disclosure. The network scheduling method may be applied to the first PE device in the VPN shown in FIG. 2, and includes, for example, but not limited to, the following steps S1000 to S 1100.

At S1000, a VPN route advertised by a core device is received according to a route forwarding table, where the VPN route carries a first VPN label and next hop address information corresponding to the core device, the route forwarding table is used for representing a correspondence between the first VPN label of the core device and a second VPN label of a second PE device, and the route forwarding table carries next hop address information corresponding to the second PE device.

At S 1100, the first VPN label is encapsulated into a data packet according to the VPN route, and the data packet carrying the first VPN label is sent to the core device, such that the core device replaces the first VPN label carried in the data packet with the second VPN label according to the route forwarding table, and sends the data packet carrying the second VPN label to the second PE device.

In an embodiment, the first PE device receives the VPN route advertised by the core device, encapsulates the first VPN label into a data packet, and sends the data packet to the core device. As such, the core device can replace the first VPN label in the data packet with the second VPN label according to the routing forwarding table and send the data packet carrying the second VPN label to the second PE device, thus implementing hierarchical VPN forwarding. In this way, packet forwarding of an end-to-end service is realized. Compared with the related technology, the core device does not need to maintain the advertising and withdrawal of routes, and a network administrator does not need to perform VPN stitching manually in a hierarchical VPN scenario. Instead, the centralized control device delivers the route forwarding table, such that after acquiring the route forwarding table, the core device can automatically implement the management and stitching of VPN services. In this way, the efficiency of resource management and allocation in the hierarchical VPN scenario can be improved, and packet forwarding of an end-to-end service can be realized stably, thereby meeting the requirements for large-scale network deployment and rapid service provisioning.

It should be noted that the steps of the network scheduling method in this embodiment have the same technical principles and the same technical effects as the steps of the network scheduling methods in the embodiments shown in FIG. 3 to FIG. 9. The difference between the embodiments lies in that the embodiments are executed by different entities. The embodiments shown in FIG. 3 to FIG. 6 are executed by the core device, the embodiments shown in FIG. 7 to FIG. 9 are executed by the centralized control device, and this embodiment is executed by the first PE device. For the technical principles and technical effects of this embodiment, reference may be made to the related description in the embodiments shown in FIG. 3 to FIG. 9. To avoid redundancy, the details will not be repeated here.

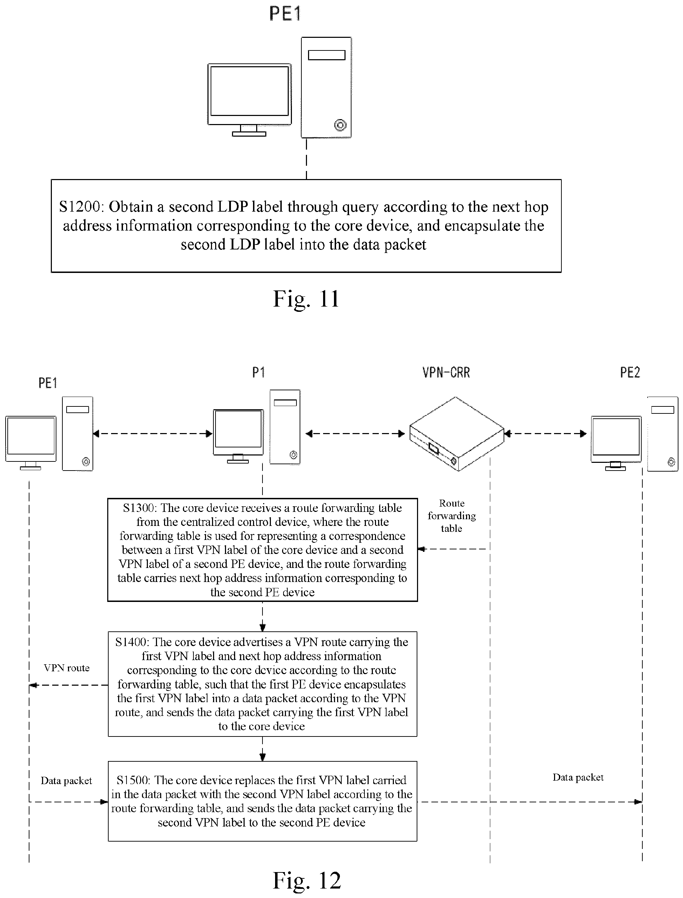

In an example shown in FIG. 11, before "sending the data packet carrying the first VPN label to the core device" in S1100, the method further includes, but not limited to, a following step S1200.

At S1200, a second LDP label is obtained through query according to the next hop address information corresponding to the core device, and the second LDP label is encapsulated into the data packet.

In an embodiment, the first PE device may can obtain the next hop address information corresponding to the core device from the advertised VPN route, and determine that the next hop points to the core device. Therefore, the first PE device obtains the second LDP label through query according to the next hop address information corresponding to the core device, i.e., obtains an outer LDP label corresponding to the core device, encapsulates the second LDP label into a data packet, and accurately sends the data packet carrying the second LDP label to the core device.

Examples are given below to illustrate the operating principles and procedures of the above embodiments,

### Example Four:

Still using FIG. 6 as an example, different from Example One, in this example, labels do not need to be classified according to prefixes, but may be classified according to RDs, and routes belonging to the same RD are assigned the same label or SID, so as to save resources. Because the forwarding table needs to be searched according to the RD, the forwarding information sent by the VPN-CRR to P1 needs to include a routing RD. Information of a forwarding table F1 includes (routing RD, inlabel, outlabel, nexthop). The same RD shares an inlabel, and the RD of VRF1 is rd1 (1:1). Because one RD shares an inlabel, label switching cannot be performed and the packet needs to be forwarded to P1, to search for the VPN route again for forwarding. Therefore, the VPN-CRR needs to advertise the original VPN route to the corresponding P1 without changing the next hop, and dynamically create the VRF according to the RD.

The following steps are executed.

At step 401, PE2 generates a VPN instance label VPN-label2_1 (299) for VRF1, and advertises prefix routes R1 and R2 of VRF1 to the VPN-CRR, where R1 carries a routing prefix Prefix1 (1.0.1.0/24), an RD (1:1), an RT (1:1), the VPN instance label VPN-label2_1 (299), and a route next hop nexthop which is R-IP2 (200.1.1.2), and R2 carries a routing prefix Prefix2 (2.0.2.0/24), an RD (1:1), an RT (1:1), the VPN instance label VPN-label2_1 (299), and a route next hop nexthop which is R-IP2 (200.1.1.2).

At step 402, the VPN-CRR reflects the received VPN route R1 to P1, extracts the RD of the route R1, determines through query that locally there is no VRF corresponding to the RD, and forms a local dynamic VRF (D_vrf1), where the RD is rd1 (1:1). When advertising R1 to other PE nodes, the VPN-CRR changes the next hop to R_IP1 (100.1.1.1) according to a routing policy, and generates a VPN instance label D_label1 (99) of D_vrf in a label range VL-range1 to which R_IP1 belongs, and delivers D_label1 to P1 as an instance label of D_VRF1.

The VPN-CRR reflects the received VPN route R2 to P1, extracts the RD of the route R2, and determines through query that a VRF corresponding to the RD (rd1) already exists locally. In this case, the VPN-CRR does not need to create a new VRF. When advertising R2 to other PE nodes, the VPN-CRR changes the next hop to R_IP1 (100.1.1.1) according to the routing policy.

At step 403, the VPN-CRR delivers the forwarding table F1 to P1 to which R-IP1 belongs through the netconf channel, where F1 is used as a route forwarding table to be sent to P1. It should be noted that the VPN_CRR may deliver F1 to P1 through the netconf channel or other channels. In this embodiment, the netconf channel is used as an example.

At step 404, P1 changes routing information of R1 and advertises the changed routing information to PE1. Changing the routing information include changing the VPN label to D_label1 and changing nexthop to R IP1.

At step 405, D_VRF1 and D_label1 (99) are sent to P1 as a local VRF instance. P1 receives the routes R1 and R2, queries a routing table of D_VRF1 according to the routing RD, forms a route forwarding table with a next hop nexthop being R IP2 and a VPN outlabel being VPN-label2_1 (299), and advertise the route forwarding table to PE1. nexthop and outlabel may be different or the same depending on the PE which is the source of the route. This embodiment is described using an example where nexthop and outlabel are the same.

At step 406, PE1 receives the route R1, imports the route R1 into a routing table of VRF1 according to the routing information RT (1:1), forms a VPN forwarding table, extracts the VPN label D_label1 of the route R1 as a forwarding outgoing label of PE1, and forms a forwarding table.

At step 407, CE1 forwards a destination IP address Dest_IP1 (1.0.1.1) of an IP packet Packet1 to PE1.

At step 408, an interface of PE1 which receives the packet is bound to the VRF1 instance, searches the routing table under VRF1, forwards the packet Packet1 according to the forwarding table corresponding to the routing RD, with a next hop being R IP1 of P1 and a VPN label being D_label1, and performs label encapsulation on the packet Packet1, to encapsulate the VPN label D_label1 and the outer LDP label.

At step 409, P1 receives Packet1, decapsulates the labels, finds according to D_label1 that the corresponding VRF is D_VRF1, queries a routing table of D_VRF1 to obtain a next top which is R_IP2, changes the VPN label from 99 to 299, obtains an MPLS label of R_IP2 (200.1.1.2) through query according to nexthop:200.1.1.2 for encapsulation, and then forwards Packet1 to PE2.

At step 410, PE2 receives the packet Packet!, determines VRF1 to which the packet Packet1 belongs according to the VPN label VPN-label2_1, queries the routing table of VRF1, and forwards the packet Packet1 to CE2.

At step 411, after receiving the packet Packet1, CE2 sends the packet Packet1 according to the destination IP address of the packet which is the local address, thus realizing packet forwarding of an end-to-end service.

FIG. 12 is a flowchart of a network scheduling method according to another embodiment of the present disclosure. The network scheduling method may be applied to the VPN shown in FIG. 2, and includes, for example, but not limited to, the following steps S1300 to S1500.

At S1300, the core device receives a route forwarding table from the centralized control device, where the route forwarding table is used for representing a correspondence between a first VPN label of the core device and a second VPN label of a second PE device, and the route forwarding table carries next hop address information corresponding to the second PE device.

At S1400, the core device advertises a VPN route carrying the first VPN label and next hop address information corresponding to the core device according to the route forwarding table, such that the first PE device encapsulates the first VPN label into a data packet according to the VPN route, and sends the data packet carrying the first VPN label to the core device.

At S1500, the core device replaces the first VPN label carried in the data packet with the second VPN label according to the route forwarding table, and sends the data packet carrying the second VPN label to the second PE device.

In an embodiment, in a case where a core device receives a route forwarding table from a centralized control device, because the route forwarding table can represent a correspondence between a first VPN label of the core device and a second VPN label of a second PE device and also carries next hop address information corresponding to the second PE device, the core device may advertise a related VPN route to the first PE device according to the route forwarding table, such that the first PE device encapsulates the first VPN label into a data packet and sends the data packet to the core device. As such, the core device can replace the first VPN label in the data packet with the second VPN label according to the routing forwarding table and send the data packet carrying the second VPN label to the second PE device, thus implementing hierarchical VPN forwarding. In this way, packet forwarding of an end-to-end service is realized. Compared with the related technology, the core device does not need to maintain the advertising and withdrawal of routes, and a network administrator does not need to perform VPN stitching manually in a hierarchical VPN scenario. Instead, the centralized control device delivers the route forwarding table, such that after acquiring the route forwarding table, the core device can automatically implement the management and stitching of VPN services. In this way, the efficiency of resource management and allocation in the hierarchical VPN scenario can be improved, and packet forwarding of an end-to-end service can be realized stably, thereby meeting the requirements for large-scale network deployment and rapid service provisioning.

It should be noted that the steps of the network scheduling method in this embodiment have the same technical principles and the same technical effects as the steps of the network scheduling methods in the embodiments shown in FIG. 3 to FIG. 11. The difference between the embodiments lies in that the embodiments are executed by different entities. The embodiments shown in FIG. 3 to FIG. 6 are executed by the core device, the embodiments shown in FIG. 7 to FIG. 9 are executed by the centralized control device, the embodiments shown in FIG. 10 to FIG. 11 are executed by the first PE device, and this embodiment is executed by the VPN. For the technical principles and technical effects of this embodiment, reference may be made to the related description in the embodiments shown in FIG. 3 to FIG. 11. To avoid redundancy, the details will not be repeated here.

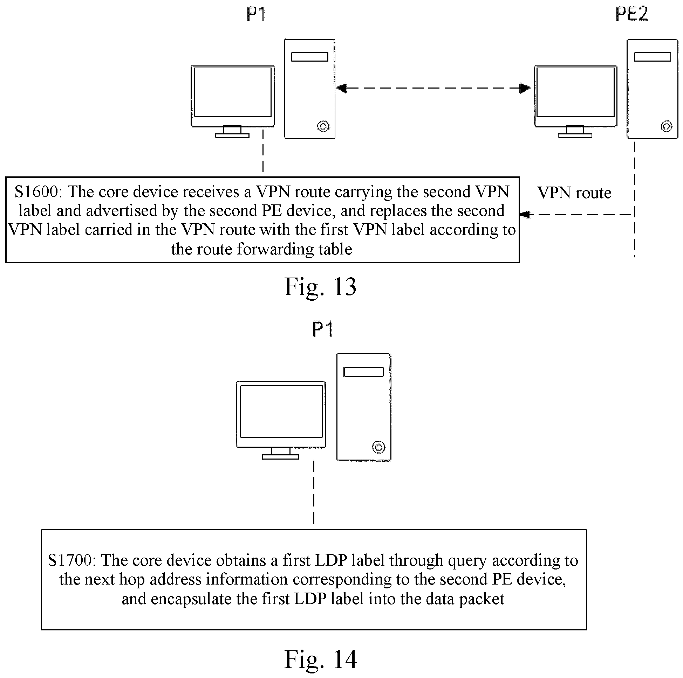

In an example shown in FIG. 13, before S1400, the method further includes, but not limited to, a following step S1600.

At S1600, the core device receives a VPN route carrying the second VPN label and advertised by the second PE device, and replaces the second VPN label carried in the VPN route with the first VPN label according to the route forwarding table.

In an embodiment, the second PE device selects a label from its own VPN label value range as the VPN label of the VRF instance (i.e., the second VPN label), and advertises the VPN route of the VRF instance to the core device, and the core device changes the VPN label from the second VPN label to the first VPN label according to the route forwarding table, and sends a VPN route of another VRF instance carrying the first VPN label to the first PE device. It can be seen that the core device can further perform route forwarding according to the route forwarding table, to provide a hierarchical VPN forwarding function.

In an example shown in FIG. 14, before "the core device sends the data packet carrying the second VPN label to the second PE device" in S 1500, the method further includes, but not limited to, a following step S 1700.

At S 1700, the core device obtains a first LDP label through query according to the next hop address information corresponding to the second PE device, and encapsulates the first LDP label into the data packet.

In an embodiment, the core device may obtain the next hop address information corresponding to the second PE device from the route forwarding table, and determine that the next hop points to the second PE device. Therefore, the core device obtains the first LDP label through query according to the next hop address information corresponding to the second PE device, i.e., obtains an outer LDP label corresponding to the second PE device, encapsulates the first LDP label into a data packet, and accurately sends the data packet carrying the first LDP label to the second PE device.

In addition, an embodiment of the present disclosure provides a network device, including:
a first processing module, configured for receiving a route forwarding table from a centralized control device, where the route forwarding table is used for representing a correspondence between a first VPN label of the network device and a second VPN label of a second PE device, and the route forwarding table carries next hop address information corresponding to the second PE device;
a second processing module, configured for advertising a VPN route carrying the first VPN label and next hop address information corresponding to the network device according to the route forwarding table, such that the first PE device encapsulates the first VPN label into a data packet according to the VPN route, and sends the data packet carrying the first VPN label to the network device; and
a third processing module, configured for replacing the first VPN label carried in the data packet with the second VPN label according to the route forwarding table, and sending the data packet carrying the second VPN label to the second PE device.

In addition, an embodiment of the present disclosure provides a network device, including:
a fourth processing module, configured for sending a route forwarding table to a core device, such that the core device advertises a VPN route carrying a first VPN label and next hop address information corresponding to the core device to a first PE device according to the route forwarding table, replaces the first VPN label carried in a data packet sent by the first PE device with a second VPN label according to the route forwarding table, and sends the data packet carrying the second VPN label to a second PE device,
where the route forwarding table is used for representing a correspondence between the first VPN label of the core device and the second VPN label of the second PE device, the route forwarding table carries next hop address information corresponding to the second PE device, and the first VPN label carried in the data packet is encapsulated by the first PE device according to the VPN route.

In addition, an embodiment of the present disclosure provides a network device, including:
a fifth processing module, configured for receiving a VPN route advertised by a core device according to a route forwarding table, where the VPN route carries a first VPN label and next hop address information corresponding to the core device, the route forwarding table is used for representing a correspondence between the first VPN label of the core device and a second VPN label of a second PE device, and the route forwarding table carries next hop address information corresponding to the second PE device; and
a sixth processing module, configured for encapsulating the first VPN label into a data packet according to the VPN route, and sending the data packet carrying the first VPN label to the core device, such that the core device replaces the first VPN label carried in the data packet with the second VPN label according to the route forwarding table, and sends the data packet carrying the second VPN label to the second PE device.

It should be noted that the network device in this embodiment has the same technical principles and the same technical effects as the steps of the network scheduling methods in the embodiments shown in FIG. 3 to FIG. 11. For the technical principles and technical effects of the network device in this embodiment, reference may be made to the related description in the embodiments shown in FIG. 3 to FIG. 11. To avoid redundancy, the details will not be repeated here.

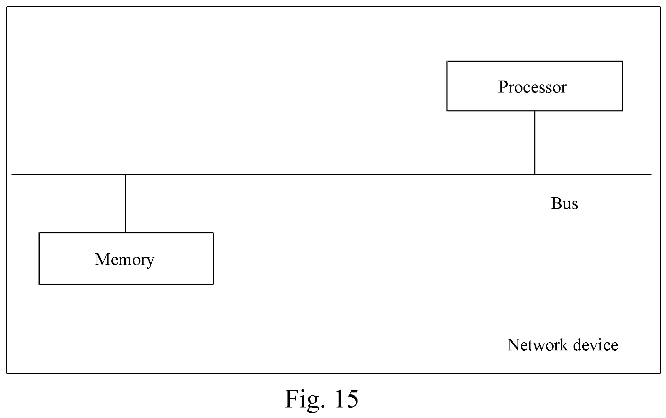

In addition, referring to FIG. 15, an embodiment of the present disclosure provides a network device, including a memory, a processor, and a computer program stored in the memory and executable by the processor.

The processor and the memory may be connected by a bus or in other ways.

The non-transitory software program and instructions required to carry out the network scheduling method of the foregoing embodiments are stored in the memory which, when executed by the processor, cause the processor to implement the network scheduling method of the above embodiments, for example, implement the method steps S100 to S300 in FIG. 3, the method steps S400 to S500 in FIG. 4, the method step S600 in FIG. 5, the method step S700 in FIG. 7, the method steps S800 to S900 in FIG. 8, the method steps S1000 to S 1100 in FIG. 10, the method step S1200 in FIG. 11, the method steps S1300 to S1500 in FIG. 12, the method step S1600 in FIG. 13, the method step S1700 in FIG. 14, the method steps 101 to 111, the method steps 201 to 211, the method steps 301 to 311, or the method steps 401 to 411.

The apparatus embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

In addition, an embodiment of the present disclosure provides a computer-readable storage medium, storing computer-executable instructions which, when executed by a processor or controller, for example, by a processor in the device embodiment described above, may cause the processor to carry out the network scheduling method of the above embodiments, for example, implement the method steps S100 to S300 in FIG. 3, the method steps S400 to S500 in FIG. 4, the method step S600 in FIG. 5, the method step S700 in FIG. 7, the method steps S800 to S900 in FIG. 8, the method steps S1000 to S1100 in FIG. 10, the method step S1200 in FIG. 11, the method steps S1300 to S1500 in FIG. 12, the method step S1600 in FIG. 13, the method step S1700 in FIG. 14, the method steps 101 to 111, the method steps 201 to 211, the method steps 301 to 311, or the method steps 401 to 411.

An embodiment of the present disclosure includes a network scheduling method applied to a core device. The network scheduling method includes: receiving a route forwarding table from a centralized control device, where the route forwarding table is used for representing a correspondence between a first VPN label of the core device and a second VPN label of a second PE device, and the route forwarding table carries next hop address information corresponding to the second PE device; advertising a VPN route carrying the first VPN label and next hop address information corresponding to the core device according to the route forwarding table, such that the first PE device encapsulates the first VPN label into a data packet according to the VPN route, and sends the data packet carrying the first VPN label to the core device; and replacing the first VPN label carried in the data packet with the second VPN label according to the route forwarding table, and sending the data packet carrying the second VPN label to the second PE device. According to the scheme provided in the embodiments of the present disclosure, in a case where a core device receives a route forwarding table from a centralized control device, because the route forwarding table can represent a correspondence between a first VPN label of the core device and a second VPN label of a second PE device and also carries next hop address information corresponding to the second PE device, the core device may advertise a related VPN route to the first PE device according to the route forwarding table, such that the first PE device encapsulates the first VPN label into a data packet and sends the data packet to the core device. As such, the core device can replace the first VPN label in the data packet with the second VPN label according to the routing forwarding table and send the data packet carrying the second VPN label to the second PE device, thus implementing hierarchical VPN forwarding. In this way, packet forwarding of an end-to-end service is realized. Compared with the related technology, the core device does not need to maintain the advertising and withdrawal of routes, and a network administrator does not need to perform VPN stitching manually in a hierarchical VPN scenario. Instead, the centralized control device delivers the route forwarding table, such that after acquiring the route forwarding table, the core device can automatically implement the management and stitching of VPN services. In this way, the efficiency of resource management and allocation in the hierarchical VPN scenario can be improved, and packet forwarding of an end-to-end service can be realized stably, thereby meeting the requirements for large-scale network deployment and rapid service provisioning.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure have been described above, the present disclosure is not limited to the implementations described above. Those having ordinary skill in the art can make various equivalent modifications or replacements without departing from the scope of the present disclosure. Such equivalent modifications or replacements fall within the scope defined by the claims of the present disclosure.

## Claims

1. A network scheduling method, applied to a core device, the method comprising:
receiving a route forwarding table from a centralized control device, wherein the route forwarding table is used for representing a correspondence between a first Virtual Private Network (VPN) label of the core device and a second VPN label of a second Provider Edge (PE) device, and the route forwarding table carries next hop address information corresponding to the second PE device;
advertising a VPN route carrying the first VPN label and next hop address information corresponding to the core device according to the route forwarding table, such that the first PE device encapsulates the first VPN label into a data packet according to the VPN route, and sends the data packet carrying the first VPN label to the core device; and
replacing the first VPN label carried in the data packet with the second VPN label according to the route forwarding table, and sending the data packet carrying the second VPN label to the second PE device.

2. The network scheduling method of claim 1, wherein before advertising a VPN route carrying the first VPN label and next hop address information corresponding to the core device according to the route forwarding table, the method further comprises:
receiving a VPN route carrying the second VPN label and advertised by the second PE device; and
replacing the second VPN label carried in the VPN route with the first VPN label according to the route forwarding table.

3. The network scheduling method of claim 1, wherein before sending the data packet carrying the second VPN label to the second PE device, the method further comprises:
obtaining a first Label Distribution Protocol (LDP) label through query according to the next hop address information corresponding to the second PE device, and encapsulating the first LDP label into the data packet.

4. A network scheduling method, applied to a centralized control device, the method comprising:
sending a route forwarding table to a core device, such that the core device advertises a Virtual Private Network (VPN) route carrying a first VPN label and next hop address information corresponding to the core device to a first Provider Edge (PE) device according to the route forwarding table, replaces the first VPN label carried in a data packet sent by the first PE device with a second VPN label according to the route forwarding table, and sends the data packet carrying the second VPN label to a second PE device,
wherein the route forwarding table is used for representing a correspondence between the first VPN label of the core device and the second VPN label of the second PE device, the route forwarding table carries next hop address information corresponding to the second PE device, and the first VPN label carried in the data packet is encapsulated by the first PE device according to the VPN route.

5. The network scheduling method of claim 4, wherein before sending a route forwarding table to a core device, the method further comprises generating the route forwarding table; and generating the route forwarding table comprises:
receiving first report information from the core device and second report information from the second PE device, wherein the first report information comprises routing address information and a VPN label value range of the core device, and the second report information comprises routing address information and a VPN label value range of the second PE device; and
generating the route forwarding table according to the first report information and the second report information.

6. A network scheduling method, applied to a first Provider Edge (PE) device, the method comprising:
receiving a Virtual Private Network (VPN) route advertised by a core device according to a route forwarding table, wherein the VPN route carries a first VPN label and next hop address information corresponding to the core device, the route forwarding table is used for representing a correspondence between the first VPN label of the core device and a second VPN label of a second Provider Edge (PE) device, and the route forwarding table carries next hop address information corresponding to the second PE device; and
encapsulating the first VPN label into a data packet according to the VPN route, and sending the data packet carrying the first VPN label to the core device, such that the core device replaces the first VPN label carried in the data packet with the second VPN label according to the route forwarding table, and sends the data packet carrying the second VPN label to the second PE device.

7. The network scheduling method of claim 6, wherein before sending the data packet carrying the first VPN label to the core device, the method further comprises:
obtaining a second Label Distribution Protocol (LDP) label through query according to the next hop address information corresponding to the core device, and encapsulating the second LDP label into the data packet.

8. A network scheduling method, applied to a network system comprising a centralized control device, a core device, a first Provider Edge (PE) device, and a second PE device, the method comprising:
receiving, by the core device, a route forwarding table sent by the centralized control device, wherein the route forwarding table is used for representing a correspondence between a first Virtual Private Network (VPN) label of the core device and a second VPN label of a second PE device, and the route forwarding table carries next hop address information corresponding to the second PE device;
advertising, by the core device, a VPN route carrying the first VPN label and next hop address information corresponding to the core device according to the route forwarding table, such that the first PE device carries out the network scheduling method of claim 6 or 7; and
replacing, by the core device, the first VPN label carried in the data packet with the second VPN label according to the route forwarding table, and sending the data packet carrying the second VPN label to the second PE device.

9. The network scheduling method of claim 8, wherein before advertising, by the core device, a VPN route carrying the first VPN label and next hop address information corresponding to the core device according to the route forwarding table, the method further comprises:
receiving, by the core device, a VPN route carrying the second VPN label and advertised by the second PE device, and replacing the second VPN label carried in the VPN route with the first VPN label according to the route forwarding table.

10. The network scheduling method of claim 8, wherein before sending, by the core device, the data packet carrying the second VPN label to the second PE device, the method further comprises:
obtaining, by the core device, a first Label Distribution Protocol (LDP) label through query according to the next hop address information corresponding to the second PE device, and encapsulating the first LDP label into the data packet.

11. A network device, comprising:
a first processing module, configured for receiving a route forwarding table from a centralized control device, wherein the route forwarding table is used for representing a correspondence between a first Virtual Private Network (VPN) label of the network device and a second VPN label of a second Provider Edge (PE) device, and the route forwarding table carries next hop address information corresponding to the second PE device;
a second processing module, configured for advertising a VPN route carrying the first VPN label and next hop address information corresponding to the network device according to the route forwarding table, such that the first PE device encapsulates the first VPN label into a data packet according to the VPN route, and sends the data packet carrying the first VPN label to the network device; and
a third processing module, configured for replacing the first VPN label carried in the data packet with the second VPN label according to the route forwarding table, and sending the data packet carrying the second VPN label to the second PE device.

12. A network device, comprising:
a fourth processing module, configured for sending a route forwarding table to a core device, such that the core device advertises a Virtual Private Network (VPN) route carrying a first VPN label and next hop address information corresponding to the core device to a first Provider Edge (PE) device according to the route forwarding table, replaces the first VPN label carried in a data packet sent by the first PE device with a second VPN label according to the route forwarding table, and sends the data packet carrying the second VPN label to a second PE device,
wherein the route forwarding table is used for representing a correspondence between the first VPN label of the core device and the second VPN label of the second PE device, the route forwarding table carries next hop address information corresponding to the second PE device, and the first VPN label carried in the data packet is encapsulated by the first PE device according to the VPN route.

13. A network device, comprising:
a fifth processing module, configured for receiving a Virtual Private Network (VPN) route advertised by a core device according to a route forwarding table, wherein the VPN route carries a first VPN label and next hop address information corresponding to the core device, the route forwarding table is used for representing a correspondence between the first VPN label of the core device and a second VPN label of a second Provider Edge (PE) device, and the route forwarding table carries next hop address information corresponding to the second PE device; and
a sixth processing module, configured for encapsulating the first VPN label into a data packet according to the VPN route, and sending the data packet carrying the first VPN label to the core device, such that the core device replaces the first VPN label carried in the data packet with the second VPN label according to the route forwarding table, and sends the data packet carrying the second VPN label to the second PE device.

14. A network device, comprising: a memory, a processor, and a computer program stored in the memory and executable by the processor, wherein the computer program, when executed by the processor, causes the processor to carry out the network scheduling method of any of claims 1 to 9.

15. A computer-readable storage medium, storing computer-executable instructions which, when executed by a processor, cause the processor to carry out the network scheduling method of any of claims 1 to 9.
